(19) Europäisches Patentamt
European Patent Office
Office européen des brevets

(11) EP 2 458 671 A1

(12) **EUROPEAN PATENT APPLICATION**
published in accordance with Art. 153(4) EPC

(43) Date of publication:
**30.05.2012 Bulletin 2012/22**

(21) Application number: **10802043.9**

(22) Date of filing: **17.06.2010**

(51) Int Cl.:
***H01M 10/0587** (2010.01)* ***H01M 4/13** (2010.01)*
***H01M 4/139** (2010.01)* ***H01M 4/62** (2006.01)*
***H01M 10/052** (2010.01)*

(86) International application number:
**PCT/JP2010/004042**

(87) International publication number:
**WO 2011/010421 (27.01.2011 Gazette 2011/04)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **21.07.2009 JP 2009170464**

(71) Applicant: **Panasonic Corporation**
**Kadoma-shi**
**Osaka 571-8501 (JP)**

(72) Inventors:
- **MURAOKA, Yoshiyuki**
**1-61, Shiromi 2-chome, Chuo-ku,**
**Osaka-shi**
**Osaka 540-6207 (JP)**
- **UGAJI, Masaya**
**1-61, Shiromi 2-chome, Chuo-ku,**
**Osaka-shi**
**Osaka 540-6207 (JP)**

(74) Representative: **Grünecker, Kinkeldey, Stockmair & Schwanhäusser**
**Leopoldstrasse 4**
**80802 München (DE)**

# (54) RECTANGULAR NONAQUEOUS ELECTROLYTE SECONDARY BATTERY AND METHOD FOR MANUFACTURING SAME

(57) A rectangular nonaqueous electrolyte secondary battery includes a positive electrode (11) and a negative electrode (12) wound with a porous insulating layer (13) interposed therebetween. The positive electrode (11) includes a positive electrode current collector (11A), and a positive electrode material mixture layer (11B). The positive electrode material mixture layer (11B) is provided on each of surfaces, or one of surfaces of the positive electrode current collector (11A), contains a positive electrode active material and a binder, and has a porosity of 17% or lower. The positive electrode (11) has a tensile strength of 15 N/cm or lower when a tensile extension of the positive electrode is 1%. A peel strength between the positive electrode current collector (11A) and the positive electrode material mixture layer (11B) is 3 N/m to 15 N/m, both inclusive.

FIG.4

1
11A
11B
11
13
12A
12B
12

EP 2 458 671 A1

## Description

### TECHNICAL FIELD

The present invention relates to a rectangular nonaqueous electrolyte secondary battery, and a method for manufacturing the same.

### BACKGROUND ART a

Due to recent reduction in size and weight of electronic devices, such as cellular phones and notebook computers, secondary batteries used as power sources for the electronic devices have been and are being required to have higher capacity. A nonaqueous electrolyte secondary battery (e.g., a lithium ion secondary battery) is an example of batteries which meet the requirement (see, for example, Patent Document 1). Not only the reduction in size and weight, the electronic devices are required to have multiple functions. Thus, further increase in capacity of the nonaqueous electrolyte secondary batteries has been and is being in demand.

The capacity of the nonaqueous electrolyte secondary battery can be increased by increasing the density of an active material in a material mixture layer. Specifically, the density of the active material can be increased by increasing the amount of the active material in the material mixture layer, and increasing pressure for rolling the material mixture layer. However, the increased density of the active material in the material mixture layer leads to reduction in flexibility of an electrode.

As a solution for increasing the flexibility of the electrode, Patent Document 2 teaches a material mixture layer provided with a plurality of recesses or holes. This allows the electrode to bend greatly around the recess or the hole as a fulcrum without break.

Patent Document 3 teaches a positive electrode of a nonaqueous electrolyte secondary battery having the following structure. Specifically, the positive electrode is configured in such a manner that a peel strength between a positive electrode current collector and a positive electrode material mixture layer is reduced when the density of a positive electrode active material in the positive electrode material mixture layer is increased, and that the peel strength between the positive electrode current collector and the positive electrode material mixture layer is increased when the density of the positive electrode active material in the positive electrode material mixture layer is reduced.

### CITATION LIST

### PATENT DOCUMENTS

[Patent Document 1] Japanese Patent Publication No. H05-182692
[Patent Document 2] Japanese Patent Publication No. 2002-343340
[Patent Document 3] Japanese Patent Publication No. 2008-159410

### SUMMARY OF THE INVENTION

### TECHNICAL PROBLEM

When a nonaqueous electrolyte secondary battery including a wound electrode group (an electrode group formed by winding a positive electrode and a negative electrode with a porous insulating layer interposed therebetween) is repeatedly charged and discharged, the electrode group may be deformed in some cases. Specifically, a negative electrode active material expands and contracts through the charge/discharge, and the negative electrode expands and contracts. When the positive electrode is not deformed in accordance with the expansion and contraction of the negative electrode, phase shift occurs between the positive and negative electrodes. The phase shift significantly occurs in a flat electrode group, in particular, at longitudinal ends of the flat electrode group. In the following description, the deformation of the electrode group will be referred to as buckling.

When the electrode group buckles, a distance between the positive and negative electrodes varies in the direction of winding the electrode group. At part of the electrode group where the distance between the positive and negative electrodes is large, overvoltage during the charge is high, and the battery is not smoothly charged. At part of the electrode group where the distance between the positive and negative electrodes is small, the overvoltage during the charge is low, and the battery is smoothly charged. In this way, the wound electrode group is charged/discharged in an uneven manner. This may lead to reduction in cycle characteristics.

In view of the foregoing, the present invention has been achieved. An object of the invention is to provide a rectangular nonaqueous electrolyte secondary which can be increased in capacity without reducing the flexibility of the positive electrode, and has good cycle characteristics.

SOLUTION TO THE PROBLEM

A rectangular nonaqueous electrolyte secondary battery of the present invention includes an electrode group formed by winding a positive electrode and a negative electrode with a porous insulating layer interposed therebetween. The positive electrode includes a positive electrode current collector, and a positive electrode material mixture layer which is formed on at least one of surfaces of the positive electrode current collector, and contains a positive electrode active material and a binder. The positive electrode material mixture layer has a porosity of 17% or lower. The positive electrode has a tensile strength of 15 N/cm or lower when a tensile extension of the positive electrode is 1%. A peel strength between the positive electrode current collector and the positive electrode material mixture layer is 3 N/m to 15 N/m, both inclusive.

With this configuration, the porosity of the positive electrode material mixture layer can be reduced, and the battery capacity can be increased. The positive electrode can be made softer, thereby preventing the positive electrode from being hardened due to increase in capacity. Further, the positive electrode material mixture layer is easily peeled off the positive electrode current collector, thereby providing the electrode group without breaking the positive electrode.

In a preferred embodiment described below, the positive electrode material mixture layer preferably contains 0.5 parts by mass to 1.5 parts by mass, both inclusive, of the binder relative to 100 parts by mass of the positive electrode active material, more preferably 1.1 parts by mass to 1.5 parts by mass, both inclusive, of the binder relative to 100 parts by mass of the positive electrode active material. The binder in the rectangular nonaqueous electrolyte secondary battery of the present invention is preferably a copolymer containing a poly(vinylidene fluoride (PVdF) or VdF unit, and preferably has a molecular weight of 1,000,000 or higher.

A method for manufacturing the rectangular nonaqueous electrolyte secondary battery of the present invention includes: providing positive electrode material mixture slurry containing the positive electrode active material and the binder on a surface of the positive electrode current collector; rolling the positive electrode current collector on the surface of which the positive electrode active material and the binder are formed after the provision of the positive electrode material mixture slurry; and thermally treating the rolled positive electrode current collector after the rolling in such a manner that the positive electrode has a tensile strength of 15 N/cm or lower when a tensile strength of the positive electrode is 1%.

In the present specification, the tensile strength of the positive electrode when the tensile extension of the positive electrode is 1% is measured in the following manner. First, the nonaqueous electrolyte secondary battery is charged, and the charged nonaqueous electrolyte secondary battery is disassembled to remove the positive electrode. A test positive electrode (15 mm in width, 20 mm in length) is cut from the positive electrode. With one of longitudinal ends of the test positive electrode fixed, the other end of the test positive electrode is pulled in such a manner that the test positive electrode extends in the longitudinal direction at a rate of 1 mm/min. Then, when the tensile extension of the test positive electrode is 1%, the tensile strength of the test positive electrode is measured.

The "tensile extension" can be obtained from an equation "tensile extension" = $\{(\beta-\alpha)/\alpha\} \times 100$, where $\alpha$ is a length of the test piece before extension, and $\beta$ is a length of the test piece after the extension.

In the present specification, the "porosity" of the positive electrode material mixture layer is a ratio of a total volume of void space present in the positive electrode material mixture layer relative to a total volume of the positive electrode material mixture layer, and can be obtained by the following equation.

$$\text{Porosity} = 1\text{-(volume of a first component + volume of a second component + volume of a third component)/(volume of the positive electrode material mixture layer)}$$

The volume of the positive electrode material mixture layer is calculated after the thickness of the positive electrode material mixture layer is measured using a scanning electron microscope, and the positive electrode is cut into a predetermined dimension.

The first component is a component of the positive electrode material mixture which is dissolved in acid. The second component is a component of the positive electrode material mixture which is not dissolved in acid, and is thermally volatile. The third component is a component of the positive electrode material mixture which is not dissolved in acid, and is not thermally volatile. The volumes of the first to third components are calculated in the following manner.

The positive electrode cut into the predetermined dimension is divided into the positive electrode current collector, and the positive electrode material mixture layer. Then, the weight of the positive electrode material mixture is measured. Then, the positive electrode material mixture is dissolved in acid, and is divided into a component which is dissolved in acid, and a component which is not dissolved in acid. Qualitative and quantitative analysis using fluorescence X-rays, and structural analysis by X-ray analysis are performed on the component dissolved in acid. Then, a lattice constant and a molecular weight of this component are calculated based on the results of the qualitative and quantitative analysis and the structural analysis. Thus, the volume of the first component can be calculated.

As to the component which is not dissolved in acid, its weight is measured. Then, qualitative analysis by gas chromatography and mass spectrometry is performed on this component, and then thermogravimetric analysis is performed. As a result, a thermally volatile component in the component which is not dissolved in acid is vaporized. However, in the component which is not dissolved in acid, not all the thermally volatile component is vaporized in the thermogravimetric analysis. Therefore, it is difficult to calculate the weight of the thermally volatile component in the component which is not dissolved in acid from the results of the thermogravimetric analysis (the results of the thermogravimetric analysis of the sample). Then, a standard sample of the thermally volatile component in the component which is not dissolved in acid is prepared, and the thermogravimetric analysis is performed on the standard sample (the results of the qualitative analysis by gas chromatography and mass spectrometry showed the composition of the thermally volatile component in the component which is not dissolved in acid). Then, the weight of the thermally volatile component in the component which is not dissolved in acid is calculated from the results of the thermogravimetric analysis of the sample, and the results of the thermogravimetric analysis of the standard sample. Thus, the volume of the second component is calculated using the calculated weight, and true density of the thermally volatile component in the component which is not dissolved in acid.

When the weight of the thermally volatile component in the component which is not dissolved in acid is obtained, weight of a component which is not thermally volatile in the component which is not dissolved in acid can be obtained from the results of the thermogravimetric analysis of the sample and the obtained weight of the sample. Thus, the volume of the third component can be calculated using the obtained weight, and true density of the component which is not thermally volatile in the component which is not dissolved in acid.

## ADVANTAGES OF THE INVENTION

According to the present invention, the capacity of the battery can be increased without reducing the flexibility of the positive electrode, and the battery can be provided with good cycle characteristics.

## BRIEF DESCRIPTION OF THE DRAWINGS

[FIG. 1] FIG. 1 is a table indicating a relationship among conditions for thermal treatment after rolling, a tensile strength of a positive electrode, and expansion of a battery case after a charge/discharge cycle test.

[FIG. 2] FIG. 2 is a table indicating a relationship between a porosity of a positive electrode material mixture layer and break of a positive electrode of a flat electrode group.

[FIG. 3] FIG. 3 is a perspective view, partially cut away, illustrating a nonaqueous electrolyte secondary battery according to an embodiment of the present invention.

[FIG. 4] FIG. 4 is a cross-sectional view of an electrode group according to the embodiment of the present invention.

[FIG. 5] FIG. 5 is a cross-sectional view of a device for measuring a peel strength between a positive electrode current collector and a positive electrode material mixture layer.

[FIG. 6] FIG. 6 is a table indicating the results of examples.

## DESCRIPTION OF EMBODIMENTS

A history of the present invention will be described below before the description of embodiments of the present invention.

In order to avoid buckling of an electrode group, various modifications have been made to a negative electrode. The applicant of the present invention has sought to avoid the buckling of the electrode group by modifying a positive electrode instead of the negative electrode, and has reached a conclusion that the buckling can be avoided by allowing the positive electrode to be deformed in accordance with the expansion/contraction of the negative electrode while charging the battery. Further, the applicant has found that the buckling of the electrode group in a rectangular nonaqueous electrolyte secondary battery can be avoided when the positive electrode has a tensile strength of 15 N/cm or lower when a tensile extension of the positive electrode is 1% (this is merely referred to as a "tensile strength of the positive electrode" in the following description). T his is disclosed in the specification of Japanese Patent Application No.

2009-17592.

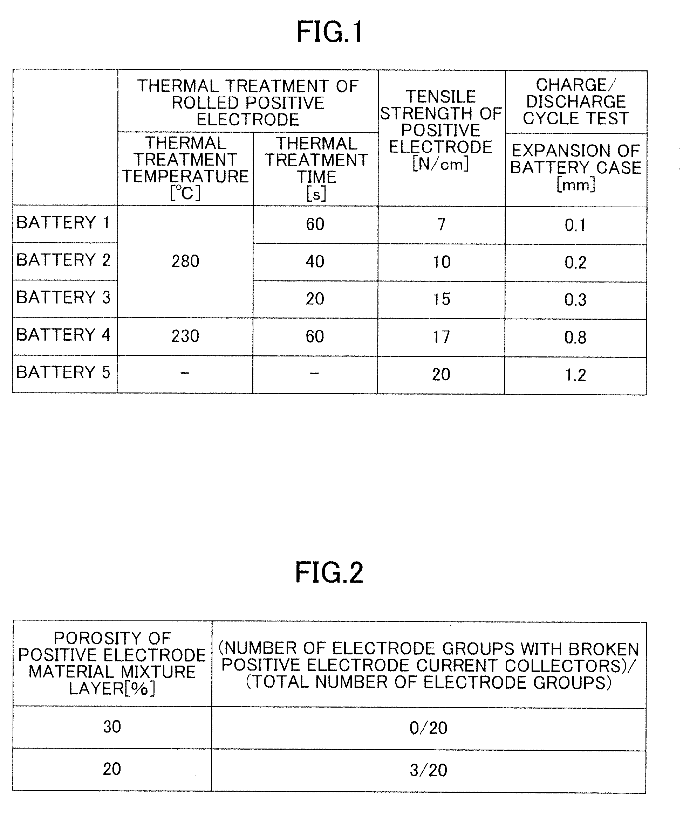

FIG. 1 is a table indicating a relationship among the conditions for heat treatment after rolling, the tensile strength of the positive electrode, and expansion of a battery case after a charge/discharge cycle test.

A comparison between the results of Batteries 1-4 and the results of Battery 5 indicates that the tensile strength of the positive electrode can be reduced when the thermal treatment is performed after the rolling. The results of Batteries 1-4 indicate that the tensile strength of the positive electrode can be reduced by performing the heat treatment after the rolling at a higher temperature, or for a longer time.

In Batteries 4-5 in which the tensile strength of the positive electrode was high, the battery case greatly expanded after the charge/discharge cycles. In Batteries 1-3 in which the tensile strength of the positive electrode was low, the expansion of the battery case was small. Specifically, Batteries 4-5 in which the tensile strength of the positive electrode was high experienced the buckling of the electrode group, and the great expansion of the battery case. In contrast, the buckling of the electrode group was reduced, and the battery case was hardly deformed in Batteries 1-3 in which the tensile strength was low. A reason for this phenomenon presumed by the applicant is as follows. When the tensile strength of the positive electrode is low, the positive electrode can easily be deformed in accordance with the expansion/ contraction of the negative electrode due to the charge/discharge of the battery. Thus, even when the charge and discharge are repeated, the buckling of the electrode group can be reduced.

As described above, the nonaqueous electrolyte secondary batteries have been and are being required to have high capacity. To meet such a requirement, increasing the density of an active material in a material mixture layer has been and is being under consideration.

When the density of the negative electrode active material in the negative electrode material mixture layer is too high, lithium ions cannot be smoothly inserted and extracted in and from the negative electrode, and lithium is easily deposited on the surface of the negative electrode in the form of metal. It is known that this may reduce the safety of the nonaqueous electrolyte secondary batteries. In contrast, it is considered that the above-described defects would not occur even when the density of the positive electrode active material in the positive electrode material mixture layer is increased. Thus, the inventors of the present invention have produced an electrode group having substantially elliptic end faces using a positive electrode in which a tensile strength is 15 N/cm or lower, and the density of the positive electrode active material in the positive electrode material mixture layer is higher than the conventional density, and have inspected the produced electrode group. FIG. 2 shows the results.

As shown in FIG. 2, when the porosity of the positive electrode material mixture layer was reduced as compared with the conventional porosity (the porosity in the conventional positive electrode material mixture layer is about 30%), the positive electrode current collector broke when the porosity of the positive electrode material mixture layer was about 20%. Although not shown in FIG. 2, the more the porosity of the positive electrode material mixture layer was reduced from 20%, the more significantly the positive electrode of a flat electrode group broke. The inventors of the present invention have considered the results as follows.

The flat electrode group is generally produced in the following manner. First, a positive electrode and a negative electrode are wound with a porous insulating layer interposed therebetween to provide an electrode group having substantially round end faces. Then, the electrode group having the substantially round end faces is compressed in a certain direction. Thus, the flat electrode group is produced.

In compressing the electrode group having the substantially round end faces in the certain direction, compressive stress is produced at part of the electrode group to which external force is applied. Thus, the part of the electrode group to which the external force is applied, which is arc-shaped, is deformed to be substantially straight. Due to the deformation, part of the compressive stress is relaxed. The compressive stress which is not relaxed, and remains in the electrode group is transferred from the part of the electrode group to which the external force is applied to part of the electrode group to which the external force is not applied. Specifically, the compressive stress is concentrated on the part of the electrode group to which the external force is not applied.

When the positive electrode material mixture layer has high porosity, (e.g., when the positive electrode material mixture layer has a porosity of about 30%), the positive electrode material mixture layer easily contracts in the thickness direction. The compressive stress is relaxed by the contraction of the positive electrode material mixture layer, thereby reducing the break of the positive electrode.

When the positive electrode material mixture layer has low porosity (e.g., the positive electrode material mixture layer has a porosity lower than 20%), the positive electrode material mixture layer is less likely to contract in the thickness direction. Thus, it is difficult to relax the compressive stress by the contraction of the positive electrode material mixture layer. The positive electrode used in this test is the positive electrode disclosed in the specification of the above-mentioned patent application, which is softer than the conventional positive electrodes. Th erefore, it is also difficult to relax the compressive stress by absorbing the compressive force in the positive electrode. That is, when the porosity of the positive electrode material mixture layer is low, the compressive stress is concentrated on the part of the electrode group to which the external force is not applied, and the positive electrode breaks. Actually, the inventors of the present invention have checked that the break of the positive electrode occurred locally at the part of the electrode group to which the external force is not applied.

The break of the positive electrode can be reduced if the compressive stress is relaxed in the part of the electrode group to which the external force is not applied. For example, when the positive electrode active material etc. is fallen from the positive electrode material mixture layer in the part of the electrode group to which the external force is not applied, the porosity of the positive electrode material mixture layer is increased in this part. Therefore, in this part, the positive electrode material mixture layer can contract in the thickness direction, thereby preventing the break of the positive electrode.

However, when the positive electrode active material etc. is fallen from the positive electrode material mixture layer, the battery capacity is reduced. Worse still, the fallen positive electrode active material etc. may pierce the porous insulating layer to contact the negative electrode, thereby causing an internal short circuit. The inventors of the present invention have thought that optimizing the peel strength between the positive electrode current collector and the positive electrode material mixture layer can reduce the break of the positive electrode without causing the internal short circuit, and reduction in battery capacity. In view of the foregoing, the present invention has been achieved. Embodiments of the present invention will be described in detail below with reference to the drawings. The present invention is not limited to the following embodiments.

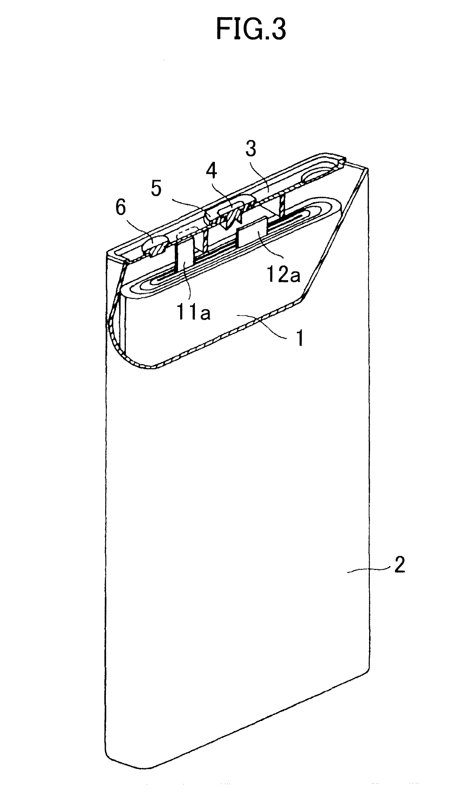

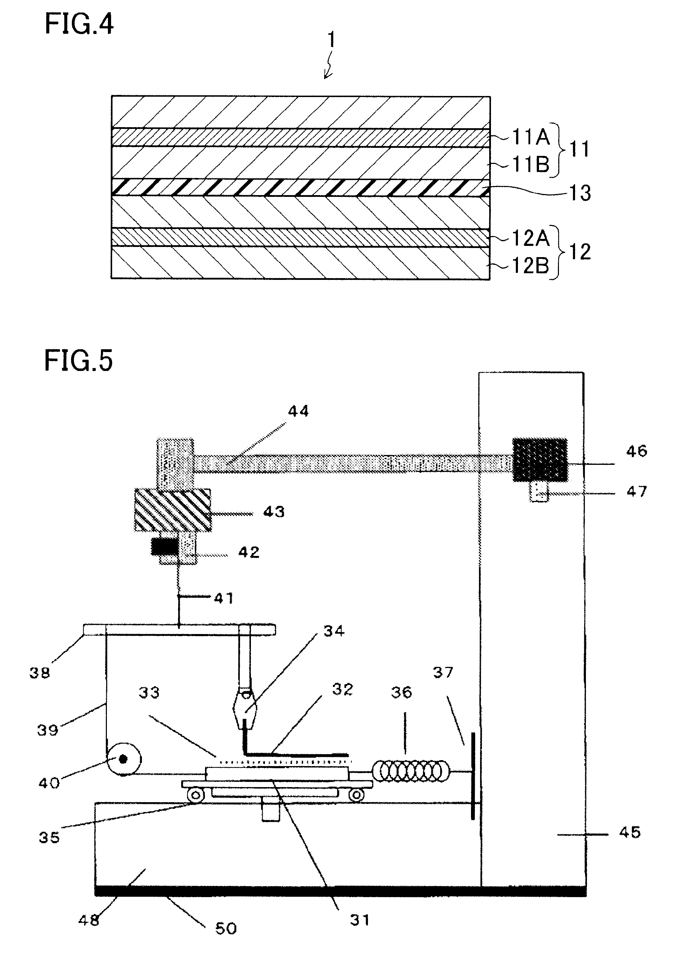

FIG. 3 is a perspective view, partially cut away, illustrating a nonaqueous electrolyte secondary battery of the present embodiment. FIG. 4 is a cross-sectional view of an electrode group of the present embodiment.

In the rectangular nonaqueous electrolyte secondary battery of the present embodiment, an electrode group 1 is placed in a battery case 2 together with a nonaqueous electrolyte, and an opening of the battery case 2 is sealed with a sealing plate 3. The electrode group 1 has a substantially elliptic c ross-section, and is formed by winding a positive electrode 11 and a negative electrode 12 with a porous insulating layer 13 interposed therebetween. The positive electrode 11 includes a positive electrode current collector 11A, and a positive electrode material mixture layer 11B, and is connected to a lower surface of the sealing plate 3 which functions as a positive electrode terminal through a positive electrode lead 11a. The negative electrode 12 includes a negative electrode current collector 12A, and a negative electrode material mixture layer 12B, and is connected to a rivet 4 which is provided on the sealing plate 3, and functions as a negative electrode terminal through a negative electrode lead 12a. The rivet 4 is insulated from the sealing plate 3 by a gasket 5. The sealing plate 3 has an injection hole (not shown), and the injection hole is sealed with a plug 6.

The positive electrode 11 of the present embodiment has a tensile strength of 15 N/cm or lower. The positive electrode material mixture layer 11B has a porosity of 17% or lower. A peel strength between the positive electrode current collector 11A and the positive electrode material mixture layer 11B is 3 N/m to 15 N/m, both inclusive. These features will be described below.

The positive electrode 11 of the present embodiment is formed to have a tensile strength of 15 N/cm or lower. A conventional positive electrode has a tensile extension of about 1.5% immediately before break. This indicates that the positive electrode 11 of the present embodiment is soft, and extends easily as compared with the conventional positive electrode. Thus, the positive electrode 11 of the present embodiment is deformed in accordance with the expansion/contraction of the negative electrode 12 during charge/discharge. This can prevent phase shift between the positive electrode 11 and the negative electrode 12 due to the charge/discharge, thereby preventing the electrode group 1 from buckling. As a result, uneven charge/discharge in the electrode group 1 can be reduced, thereby preventing reduction in cycle characteristics.

To prevent the buckling of the electrode group 1 during the charge/discharge, the softer positive electrode 11 is preferable. Specifically, a smaller tensile strength of the positive electrode 11 is preferable. However, when the positive electrode 11 is too soft, the positive electrode 11 may break when the positive electrode current collector on a surface of which the positive electrode active material etc. is provided is rolled, or the electrode group having substantially round end faces is compressed. Further, the soft positive electrode 11 is difficult to wind, thereby reducing a manufacturing yield of the electrode group 1. In consideration of the foregoing, the positive electrode 11 is formed to have a tensile strength of 15 N/cm or lower. The tensile strength is preferably 7 N/cm to 15 N/cm, both inclusive, more preferably 9 N/cm to 10 N/cm, both inclusive.

The inventors of the present invention have considered that the buckling of the electrode group 1 can be prevented when the positive electrode 11 extends by about 2% without break. As disclosed in WO2009/019861 by the applicant of the present application, the positive electrode preferably has a tensile extension of 3% or higher immediately before the break when the nonaqueous electrolyte secondary battery is in an abnormal state (e.g., when the battery is crushed). However, the buckling of the electrode group 1 during the charge/discharge may occur when the nonaqueous electrolyte secondary battery is in a normal state. Thus, the inventors have considered that the buckling of the electrode group 1 during the charge/discharge can be prevented when the positive electrode 11 has a tensile extension of about 2% immediately before the break.

To control the tensile strength of the positive electrode 11 to 15 N/cm or lower, the positive electrode current collector on the surface of which the positive electrode active material, a binder, and a conductive agent are provided is thermally treated at a predetermined temperature after the positive electrode current collector is rolled. In addition, a thickness, composition, etc. of the positive electrode current collector 11A may be changed. For example, the thickness of the positive electrode current collector 11A is 1-50 μm, preferably 5-30 μm. This can ensure the strength of the positive electrode 11, and can reduce the weight of the positive electrode 11.

The porosity of the positive electrode material mixture layer 11B of the present embodiment is 17% or lower. This can increase the capacity of the nonaqueous electrolyte secondary battery. To control the porosity of the positive electrode material mixture layer 11B to 17% or lower, for example, the positive electrode on the surface of which the positive electrode active material, the binder, and the conductive agent are provided is rolled under optimum conditions. Specifically, pressure for rolling the positive electrode may be increased, or the positive electrode may be heated during rolling. In the latter case, a coefficient of elasticity of the binder of the positive electrode can be reduced simultaneously with the rolling. Thus, the positive electrode active material etc. can be provided at high density on the surface of the positive electrode current collector 11A.

Further, in the positive electrode 11 of the present embodiment, the peel strength between the positive electrode current collector 11A and the positive electrode material mixture layer 11B is 3 N/m to 15 N/m, both inclusive. Thus, at part of the electrode group 1 on which compressive stress is concentrated (i.e., both longitudinal ends of the flat electrode group 1), the positive electrode material mixture layer 11B is easily peeled off the positive electrode current collector 11A, thereby relaxing the compressive stress. This can produce the flat electrode group 1 without breaking the positive electrode 11.

To produce the electrode group 1 without breaking the positive electrode 11, the peel strength between the positive electrode current collector 11A and the positive electrode material mixture layer 11B is preferably low. However, when the peel strength between the positive electrode current collector 11A and the positive electrode material mixture layer 11B is too low, the positive electrode material mixture layer 11B is peeled off the positive electrode current collector 11A even when relatively small impact is applied. This reduces a manufacturing yield, and capacity and safety of the battery. Thus, the peel strength between the positive electrode current collector 11A and the positive electrode material mixture layer 11B is 3 N/m to 15 N/m, both inclusive, preferably 4 N/m to 10 N/m, both inclusive, more preferably 4 N/m to 7 N/m, both inclusive.

The peel strength between the positive electrode current collector 11A and the positive electrode material mixture layer 11B depends on the amount, the material, etc. of the binder. Specifically, the positive electrode material mixture layer 11B preferably contains 0.5 parts by mass to 1.5 parts by mass, both inclusive, of the binder relative to 100 parts by mass of the positive electrode active material, more preferably 0.5 parts by mass to 1.1 parts by mass, both inclusive, of the binder relative to 100 parts by mass of the positive electrode active material. The binder of the positive electrode is a copolymer containing a PVdF or VdF unit (e.g., a copolymer of VdF and HFP (hexa fluoropropylene)), and is preferably polymerized or copolymerized to have a molecular weight of 1,000,000 or higher. It has been generally considered that the binder having the higher molecular weight shows the higher peel strength. Thus, when the molecular weight of the binder is increased, an increased binding capability can be obtained by a small amount of the binder. That is, when the molecular weight of the binder is high, the amount of the binder can be reduced, thereby increasing the battery capacity. Therefore, the higher molecular weight of the binder is more preferable. The molecular weight can suitably be changed as needed.

In this specification, the peel strength between the positive electrode current collector 11A and the positive electrode material mixture layer 11B is measured by a method disclosed by Japanese Patent Publication No. 2008-159410. FIG. 5 shows a cross-sectional view of a device for measuring the peel strength disclosed by Japanese Patent Publication No. 2008-159410. The structure of the measurement device shown in FIG. 5 will be described first, and then a method for measuring the peel strength using this measurement device will be described below.

The measurement device shown in FIG. 5 includes a base table 31. The base table 31 is a table on which a test piece 32 is placed, and the test piece 32 is fixed to the base table 31 by an adhesive 33, such as a double-sided tape, etc. An end of the test piece 32 fixed to the base table 31 is fixed to a chuck 34. The chuck 34 is connected to a lift table 38.

The base table 31 slides in the horizontal direction on a bearing 35. The base table 31 is slidable in the horizontal direction, without receiving uneven force by a spring 36 attached to a rear end of the base table 31. The spring 36 is connected to a fixed part 37. A front end of the base table 31 is connected to the lift table 38 through a wire 39 and a pulley 40. The lift table 38 is connected to a holding jig 42 through a wire 41.

A load cell 43 is connected to the holding jig 42. The load cell 43 is supported by a support 44, and detects a load of the lift table 38. The support 44 can be moved in the vertical direction by a drive 46. A linear sensor 47 for detecting movement of the holding jig 42 is connected to the drive 46. The drive 46 and the linear sensor 47 are provided inside a post 45. The base table 31 is provided on a support table 48, and the support table 48 and the post 45 are fixed to a base 50.

The peel strength of the test piece 32 is measured in the following manner. Specifically, the test piece 32 is cut into a certain size, and the cut test piece 32 is fixed to the base table 31 by the adhesive 33, and then an end of the test piece 32 is fixed to the chuck 34. Then, the drive 46 is started to pull the holding jig 42 upward at a constant speed.

Thus, the lift table 38 is lifted upward, and the chuck 34 pulls the test piece 32 upward. Stress of the test piece is measured by the load cell 43 when the test piece 32 is peeled.

In pulling the test piece 32 upward, the wire 39 pulls the base table 31. Thus, the test piece 32 is always peeled in a direction perpendicular to an upper surface of the base table 31. After the peel test, a lift test is performed on the base table 31 from which the test piece 32 is removed to measure an element of force of sliding the base table 31 only. The peel strength between the layers of the test piece 32 can be measured by subtracting the element of the force of sliding the base table 31 from the result of the peel test.

In measuring the peel strength between the positive electrode current collector 11A and the positive electrode material mixture layer 11B, the positive electrode material mixture layer 11B is bonded to the base table with the adhesive 33, and an end of the positive electrode current collector 11A fixed by the chuck 34 is pulled upward.

The positive electrode 11 of the present embodiment is produced in the following manner.

The positive electrode active material, the binder, and the conductive agent are mixed to prepare positive electrode material mixture paste. The amount of the binder is 0.5 parts by mass to 1.5 parts by mass, both inclusive, preferably 0.5 parts by mass to 1.1 parts by mass, both inclusive, relative to 100 parts by mass of the positive electrode active material.

The positive electrode material mixture paste is applied to one or both surfaces of the positive electrode current collector 11A (step (a)). Then, the positive electrode material mixture paste is dried (step (b)).

Then, the positive electrode current collector on the surface of which the positive electrode active material, the binder, and the conductive agent are provided is rolled (step (c)). In this step, when the pressure for rolling the positive electrode current collector is increased, or the positive electrode current collector is heated during the rolling, the positive electrode active material, the binder, and the conductive agent can be provided at high density on the surface of the positive electrode current collector 11A.

The rolled positive electrode current collector is thermally treated at a predetermined temperature (step (d)). In this step, as shown in FIG. 1, the tensile strength of the positive electrode 11 can be increased when the thermal treatment is performed at a higher temperature, or for a longer time. Thus, the conditions for the thermal treatment (temperature or time) can be set in such a manner that the positive electrode 11 has a tensile strength of 15 N/m or lower. Specifically, the temperature of the thermal treatment after the rolling is preferably as high as, or higher than a softening point of the positive electrode current collector 11A (e.g., 160°C), and is preferably as low as, or lower than a decomposition point of the binder contained in the positive electrode material mixture layer 11B (e.g., 350°C). The time for the thermal treatment after the rolling is suitably set in view of the productivity of the nonaqueous electrolyte secondary battery. F or example, the time is set to 1 second to 10 hours, both inclusive. When the positive electrode current collector contains 1.2 weight percent (wt. %) or higher of iron relative to aluminum, the temperature of the thermal treatment after the rolling can be set lower than a melting point of the binder of the positive electrode, and the time for the thermal treatment after the rolling can be set to 0.1 second to 1 minute, both inclusive. Thus, the binder can be prevented from melting and decomposition during the thermal treatment after the rolling. Therefore, reduction in capacity and capability of the nonaqueous electrolyte secondary battery can be reduced.

The thermal treatment after the rolling may be performed by hot air, induction heating (IH), infrared rays, or electric heating. In a preferable method, a hot roll heated to a predetermined temperature (a temperature as high as, or higher than the softening point of the positive electrode current collector) is brought into contact with the rolled positive electrode current collector. When the hot roll is used for the thermal treatment after the rolling, the time for the thermal treatment can be reduced, and energy loss can be reduced as much as possible.

In this manner, the positive electrode 11 of the present embodiment can be produced. When the electrode group 1 is produced using this positive electrode 11, the compressive stress can be relaxed in compressing the electrode group after the winding.

Specifically, when the electrode group having substantially round end faces is compressed in a certain direction, arc-shaped part of the electrode group to which the force is applied is deformed to become a straight part. Thus, the compressive stress is transferred to part of the electrode group having the substantially round end faces to which the force is not applied. Then, at the part of the electrode group having the substantially round end faces to which the force is not applied, the positive electrode material mixture layer 11B is easily peeled off the positive electrode current collector 11A due to the compressive stress. Thus, the electrode group 1 of the present embodiment can be produced without breaking the positive electrode 11.

When the electrode group 1 is produced using the positive electrode 11 of the present embodiment, and the electrode group 1 having the substantially round end faces is compressed in the certain direction, the positive electrode material mixture layer 11B is merely easily peeled off the positive electrode current collector 11A. This can reduce the reduction in battery capacity as much as possible. Actually, as a result of inspection of the rolled electrode group 1 by the inventors of the present invention, the positive electrode active material etc. is not completely peeled off the positive electrode current collector 11A, but is separated from the surface of the positive electrode current collector 11A to such a degree that the positive electrode active material can contribute to the battery reaction. Specifically, according to the present embodiment, the peel strength between the positive electrode current collector 11A and the positive electrode material mixture layer 11B is 3 N/m to 15 N/m, both inclusive. Therefore, the flat electrode group 1 can be produced without breaking the positive electrode 11, and the reduction in battery capacity can be reduced.

As described above, according to the present embodiment, the positive electrode 11 has a tensile strength of 15 N/cm or lower. Therefore, uneven charge/discharge in the electrode group 1 can be reduced, thereby preventing reduction in cycle characteristics.

According to the present embodiment, the porosity of the positive electrode material mixture layer 11B is 17% or lower, and the peel strength between the positive electrode current collector 11A and the positive electrode material mixture layer 11B is 3 N/m to 15 N/m, both inclusive. T his can increase the capacity of the nonaqueous electrolyte secondary battery. In addition, even when the positive electrode 11 becomes less flexible due to the increase in capacity of the nonaqueous electrolyte secondary battery, the electrode group 1 can be produced without breaking the positive electrode 11.

Typical examples of the materials of the positive electrode 11, the negative electrode 12, the porous insulating layer 13, and the nonaqueous electrolyte of the present embodiment will be described below. Needless to say, the following typical examples do not limit the materials of the positive electrode 11, the negative electrode 12, the porous insulating layer 13, and the nonaqueous electrolyte of the present embodiment.

The positive electrode current collector 11A may be foil or a plate made of an aluminum alloy containing iron. A plurality of holes may be formed in the foil or the plate.

The positive electrode material mixture layer 11B may contain a binder, a conductive agent, etc., in addition to the positive electrode active material. Examples of the positive electrode active material include, for example, lithium-containing composite metal oxide. Typical examples thereof include $LiCoO_2$, $LiNiO_2$ $LiMnO_2$ $LiCoNiO_2$ etc. Suitable examples of the binder include, for example, PVdF, PVdF derivatives, and rubber-based binders (e.g., fluoro rubber, acrylic rubber, etc.). Examples of the conductive agent include, for example, graphites, carbon blacks such as acetylene black, etc.

The volume of the binder in the positive electrode material mixture layer 11B is preferably 1% to 6%, both inclusive, relative to the volume of the positive electrode active material in the positive electrode material mixture layer 11B. Thus, an area of the positive electrode active material coated with the binder which is molten through the thermal treatment after the rolling can be reduced as much as possible, thereby preventing the reduction in battery capacity through the thermal treatment after the rolling. In addition, the volume of the binder in the positive electrode material mixture layer 11B is 1% or higher relative to the volume of the positive electrode active material in the positive electrode material mixture layer 11B. Thus, the positive electrode active material can be bound to the positive electrode current collector 11A.

The volume of the conductive agent in the positive electrode material mixture layer 11B is preferably 1% to 6%, both inclusive, relative to the volume of the positive electrode active material in the positive electrode material mixture layer 11B. Thus, even when the porosity of the positive electrode material mixture layer 11B is 17% or lower, the reduction in cycle characteristics can be reduced without reducing the battery capacity.

The negative electrode current collector 12A may be a plate made of copper, stainless steel, nickel, etc., for example. A plurality of holes may be formed in the plate.

The negative electrode material mixture layer 12B may contain a binder etc., in addition to the negative electrode active material. Examples of the negative electrode active material include, for example, graphite, carbon materials such as carbon fiber, silicon compounds such as SiOx, etc.

The negative electrode 12 is produced in the following manner, for example. Negative electrode material mixture slurry containing the negative electrode active material, the binder, etc. is prepared, and the negative electrode material mixture slurry is applied to both surfaces of the negative electrode current collector 12A, and is dried. Then, the negative electrode current collector on each of the surfaces of which the negative electrode active material is provided is rolled. The negative electrode may be thermally treated after the rolling at a predetermined temperature for a predetermined time.

Examples of the porous insulating layer 13 include a thin microporous film, woven fabric, nonwoven fabric, etc., having high ion permeability, predetermined mechanical strength, and an insulating property. In particular, polyolefin such as polypropylene, polyethylene, etc., may preferably be used as the porous insulating layer 13. Polyolefin has high durability, and has a shut-down function. Therefore, use of polyolefin can improve the safety of the nonaqueous electrolyte secondary battery. When the thin microporous film is used as the porous insulating layer 13, the thin microporous film may be a monolayer film of a single material, or may be a composite or multilayer film of two or more materials.

A nonaqueous electrolyte solution contains an electrolyte, and a nonaqueous solvent dissolving the electrolyte.

The nonaqueous solvent may be a known nonaqueous solvent. The type of the nonaqueous solvent is not particularly limited. For example, one of cyclic carbonate, chain carbonate, cyclic carboxylate, etc. may be used alone, or two or more of them may be mixed.

As the electrolyte, for example, one of $LiClO_4$, $LiBF_4$, $LiPF_6$, $LiAlCl_4$, $LiSbF_6$, LiSCN, $LiCF_3SO_3$, $LiCF_3CO_2$, $LiAsF_6$, $LiB_{10}Cl_{10}$, lower aliphatic lithium carboxylate, LiCl, LiBr, LiI, chloroborane lithium, borates, imidates, etc. may be used, or two or more of them may be used in combination. The amount of the electrolyte dissolved in the nonaqueous solvent is preferably 0.5 mol/$m^3$ to 2 mol/$m^3$, both inclusive.

In addition to the electrolyte and the nonaqueous solvent, the nonaqueous electrolyte may contain an additive which is decomposed on the negative electrode to form a highly ion conductive coating on the negative electrode, thereby improving the charge/discharge efficiency of the battery. As the additive having such a function, for example, one of vinylene carbonate (VC), vinyl ethylene carbonate (VEC), divinyl ethylene carbonate, etc. may be used alone, or two or more of them may be used in combination.

The preferred embodiment of the present invention has been described above. The embodiment does not limit the present invention, and can be modified in various ways. For example, in the above-described embodiment, a cylindrical lithium ion secondary battery has been described as an example of the nonaqueous electrolyte secondary battery. However, the present invention can be applied to rectangular lithium ion secondary batteries, nickel metal hydride batteries, etc. within the scope of the advantages of the present invention.

In the nonaqueous electrolyte secondary battery, current may be collected through a lead as described above, or through a current collector plate. When the current collection is performed using the current collector plate, resistance during the current collection can be reduced.

In order to increase the battery capacity, the porosity of the positive electrode material mixture layer is preferably small. Specifically, the porosity of the positive electrode material mixture layer is preferably 15% or lower, more preferably 10% or lower. When the porosity of the positive electrode material mixture layer is too low, the positive electrode material mixture layer cannot reliably hold the nonaqueous electrolyte. Thus, the porosity of the positive electrode material mixture layer is preferably 5% or higher to keep the nonaqueous electrolyte reliably held in the positive electrode material mixture layer, and to increase the battery capacity.

The copolymer containing a VdF unit is not limited to a copolymer of VdF and HFP, and a suitable copolymer can be selected as needed.

[Examples]

The present invention will be described in detail by way of examples. The following examples do not limit the present invention.

1. Details of Experiment

(a) Method for Producing Battery

(Battery 6)

(Production of Positive Electrode)

$LiCoO_2$ having an average particle diameter of 10 $\mu$m was used as the positive electrode active material. Positive electrode material mixture slurry was obtained by mixing 4.5 parts by mass of acetylene black (a conductive agent) relative to 100 parts by mass of the positive electrode active material, and a solution of polyvinylidene fluoride (PVdF, a binder) in N-methyl-2-pyrrolidone (NMP) (7208 manufactured by Kureha Corporation). The amount of PVdF was 1.1 parts by mass relative to 100 parts by mass of the positive electrode active material.

The obtained positive electrode material mixture slurry was applied to both surfaces of 15 $\mu$m thick aluminum foil containing iron (a positive electrode current collector A8021H-H18-15RK manufactured by Nippon Foil Mfg. Co., Ltd., containing 1.5% by mass of iron relative to aluminum). The positive electrode material mixtures slurry was not applied to part of the positive electrode current collector to which a positive electrode lead is connected. After the positive electrode material mixture slurry was dried, the positive electrode current collector on each surface of which the positive electrode active material etc. were provided was rolled to obtain a 0.157 mm thick positive electrode plate. The positive electrode material mixture layer had a porosity of 15%.

The obtained positive electrode plate was cut into a dimension of 57 mm in width, and 564 mm in length to obtain a positive electrode. The thickness of the positive electrode active material layer on each surface of the positive electrode was 71 $\mu$m.

The obtained positive electrode was thermally treated with hot air of 190°C for 5 seconds.

Then, a tensile strength of the thermally treated positive electrode was measured in the following manner. As a result, the positive electrode had a tensile strength of 15 N/cm, and the peel strength between the positive electrode current collector and the positive electrode material mixture layer was 9 N/m.

(Production of Negative Electrode)

Artificial graphite flakes having an average particle diameter of about 20 μm were used as a negative electrode active material. Negative electrode material mixture slurry was obtained by mixing 3 parts by mass of styrene butadiene rubber (a binder) relative to 100 parts by mass of the negative electrode active material, and 100 parts by mass of an aqueous solution containing 1 wt. % of carboxymethyl cellulose.

The obtained negative electrode material mixture slurry was applied to both surfaces of 8 μm thick copper foil (a negative electrode current collector). The negative electrode material mixture slurry was not applied to part of the negative electrode current collector to which a negative electrode lead is connected. After the negative electrode material mixture slurry was dried, negative electrode current collector on each surface of which the negative electrode active material etc. were provided was rolled to obtain a 0.156 mm thick negative electrode plate.

The obtained negative electrode plate was cut into a dimension of 58.5 mm in width, and 750 mm in length to obtain a negative electrode. The thickness of the negative electrode active material layer on each surface of the current collector was 74 μm.

The obtained negative electrode was thermally treated with hot air of 190°C in a nitrogen atmosphere for 10 hours.

(Preparation of Nonaqueous Electrolyte)

A liquid nonaqueous electrolyte was used. Specifically, to a mixed solvent containing ethylene carbonate and dimethyl carbonate in a volume ratio of 1:3, vinylene carbonate was added at a concentration of 5 wt. % (about 0.6 mol/L), and $LiPF_6$ was dissolved in a concentration of 1.0 mol/L.

(Assembly of Rectangular Battery)

A rectangular nonaqueous electrolyte secondary battery shown in FIG. 3 was produced.

An end of an aluminum positive electrode lead was connected to the part of the positive electrode current collector to which the positive electrode material mixture slurry was not applied. An end of a nickel negative electrode lead was connected to the part of the negative electrode current collector to which the negative electrode material mixture slurry was not applied. Then, the positive and negative electrodes were arranged in such a manner that the positive and negative electrode leads extend in the same direction, and the positive and negative electrodes were wound with a polyethylene separator interposed therebetween. An electrode group obtained in this manner was compressed in a certain direction to produce a flat electrode group.

A lower insulator was arranged at a lower end of the obtained electrode group, and the flat electrode group was placed in a rectangular battery case with the lower insulator positioned at the lower end. The other end of the negative electrode lead was connected to a rivet provided at the center of a sealing plate, and the other end of the positive electrode lead was connected to a back surface of the sealing plate.

Then, an edge of the sealing plate is fitted in an opening of the battery case, and the sealing plate was laser-welded to the opening of the battery case. Then, 2.14 g of the nonaqueous electrolyte solution was injected through an injection hole. After the battery was charged at a current of 200 mA for 30 minutes, the injection hole was sealed with a plug, and the plug was laser-welded to the rectangular battery case. Thus, a rectangular lithium ion secondary battery (Battery 6) of 35 mm in width, 5.7 mm in thickness, and 36 mm in height was produced.

(Battery 7)

Battery 7 was produced in the same manner as Battery 6 except that the amount of PVdF was changed to 1.5 parts by mass relative to 100 parts by mass of the positive electrode active material. The positive electrode material mixture layer had a porosity of 15%.

(Battery 8)

Battery 8 was produced in the same manner as Battery 6 except that the amount of PVdF was changed to 0.6 parts by mass relative to 100 parts by mass of the positive electrode active material. The positive electrode material mixture layer had a porosity of 15%.

(Battery 9)

Battery 9 was produced in the same manner as Battery 6 except that the rolled positive electrode was not thermally treated. The positive electrode material mixture layer had a porosity of 15%.

(Battery 10)

Battery 10 was produced in the same manner as Battery 6 except that the amount of PVdF was changed to 1.7 parts by mass relative to 100 parts by mass of the positive electrode active material. The positive electrode material mixture layer had a porosity of 15%.

(Battery 11)

Battery 11 was produced in the same manner as Battery 6 except that the amount of PVdF was changed to 0.4 parts by mass relative to 100 parts by mass of the positive electrode active material. The positive electrode material mixture layer had a porosity of 15%.

(b) Method for Evaluating Battery

(Break of Positive Electrode in Electrode Group)

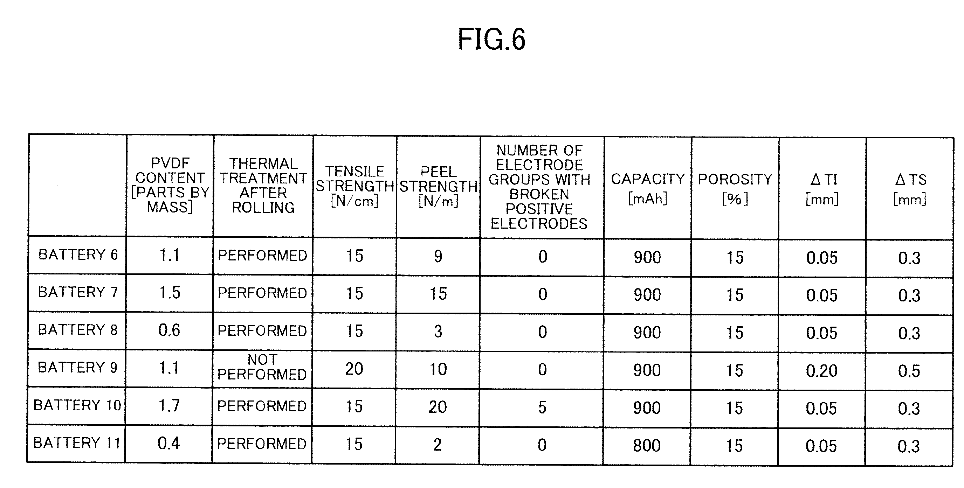

Fifty electrode groups were produced to check whether the positive electrode broke or not. A table of FIG. 6 shows the results in a column of "number of batteries with broken positive electrode."

(Measurement of Increase in Battery Thickness after Finishing Process)

In Batteries 6-11, an increase in battery thickness after a finishing process was measured.
First, a thickness of a center portion of the battery in an axial direction of the battery was measured immediately after the production. The obtained thickness was referred to as T1.
Then, all the produced batteries were finished. Specifically, in an environment of 25°C, the produced batteries were charged at a constant current of 200 mA to a battery voltage of 4.1 V, was discharged at a constant current of 200 mA until the battery voltage was reduced to 3.0 V, and was charged at a constant current of 200 mA to a battery voltage of 4.1 V. Then, the batteries were stored in an environment of 45°C for 2 days. Then, each of the stored batteries was discharged in an environment of 25°C at a constant current of 200 mA until the battery voltage was reduced to 2.5 V. The finishing process was performed in this manner. Then, the thickness of the center portion of each of the batteries in the axial direction of the battery was measured. The obtained thickness was referred to as T2.
Increase in thickness ΔTI of each battery after the finishing process was calculated by the following equation (1). The results were shown in a column of "ΔTI" in FIG. 6.

$$\Delta TI = T2 - T1: \text{equation (1)}$$

(Measurement of Standard Capacity of Battery)

Standard capacities of Batteries 6-11 were measured in the following manner.
In an environment of 25°C, each of the finished batteries was charged at a constant current of 200 mA to a battery voltage of 4.2V, was charged at a constant voltage of 4.2 V until a current value was reduced to 50 mA, and was discharged at a constant current of 200 mA until the battery voltage was reduced to 2.5 V. The discharge capacity at that time was regarded as standard capacity. The obtained results were shown in a column of "capacity" in FIG. 6.

(Measurement of Increase in Battery Thickness after Cycle Test)

In each of Batteries 6-11, the thickness of the battery immediately after the production is subtracted from the thickness of the battery after the cycle test to obtain an increase in thickness of the battery after the cycle test.
In an environment of 45°C, each of the batteries was charged at a constant current of 1000 mA to a battery voltage of 4.2 V, was charged at a constant voltage of 4.2 V to a current value of 50 mA, and was discharged at a constant current of 1000 mA until the battery voltage was reduced to 2.5 V. This cycle was repeated 500 times. After the $500^{th}$ cycle was finished, a thickness T3 of the center portion of the battery in the axial direction was measured.
The increase in battery thickness after the cycle test ΔTS was calculated by the following equation (2). The obtained results are shown in a column "ΔTS" in FIG. 6.

$$\Delta TS = T3\text{-}T1: \text{(equation 2)}$$

2. Results and Discussion

FIG. 6 shows the results.

The tensile strength will be discussed first. The results of Batteries 6-8, 10, and 11, and the results of Battery 9 indicate that the tensile strength of the positive electrode was reduced when the rolled positive electrode was thermally treated. The inventors of the present invention checked that the tensile strength of the positive electrode can be changed by changing the conditions for the thermal treatment after the rolling as shown in FIG. 1.

The results of Batteries 6-8, 10, and 11, and the results of Battery 9 indicate that ΔTI and ΔTS were reduced when the tensile strength of the positive electrode was reduced. A presumable reason for the reduction in ΔTI and ΔTS is that the reduced tensile strength of the positive electrode allows reduction of the buckling of the electrode group even when the charge and discharge are repeated.

The peel strength will be discussed below. The results of Batteries 6-11 indicate that the peel strength between the positive electrode current collector and the positive electrode material mixture layer is increased by increasing the content of the binder in the positive electrode material mixture layer. In Battery 10, the positive electrode broke. A presumable reason for the break is that the peel strength between the positive electrode current collector and the positive electrode material mixture layer was high.

The battery capacity will be discussed below. The results of Batteries 6-10 and the results of Battery 11 indicate that the reduction in battery capacity was reduced when a certain amount of more of the binder was contained in the positive electrode material mixture layer, i.e., when the peel strength between the positive electrode current collector and the positive electrode material mixture layer was kept to a certain value or higher. In Battery 11, the battery capacity was reduced. A presumable reason for the reduction in battery capacity is that the content of the binder in the positive electrode material mixture layer was very low (the peel strength between the positive electrode current collector and the positive electrode material mixture layer was very low), and the positive electrode material mixture layer fell from the current collector during the manufacture.

INDUSTRIAL APPLICABILITY

As described above, the present invention is useful for high capacity nonaqueous electrolyte secondary batteries.

DESCRIPTION OF REFERENCE CHARACTERS

| | |
|---|---|
| 1 | Electrode group |
| 2 | Battery case |
| 3 | Sealing plate |
| 4 | Rivet |
| 5 | Gasket |
| 6 | Plug |
| 11 | Positive electrode |
| 11A | Positive electrode current collector |
| 11B | Positive electrode material mixture layer |
| 12 | Negative electrode |
| 12A | Negative electrode current collector |
| 12B | Negative electrode material mixture layer |
| 13 | Porous insulating layer |

**Claims**

**1.** A rectangular nonaqueous electrolyte secondary battery comprising:

an electrode group formed by winding a positive electrode and a negative electrode with a porous insulating layer interposed therebetween, wherein
the positive electrode includes a positive electrode current collector, and a positive electrode material mixture layer which is formed on at least one of surfaces of the positive electrode current collector, and contains a positive electrode active material and a binder,
the positive electrode material mixture layer has a porosity of 17% or lower,
the positive electrode has a tensile strength of 15 N/cm or lower when a tensile extension of the positive electrode is 1%, and
a peel strength between the positive electrode current collector and the positive electrode material mixture layer is 3 N/m to 15 N/m, both inclusive.

**2.** The rectangular nonaqueous electrolyte secondary battery of claim 1, wherein the positive electrode material mixture layer contains 0.5 parts by mass to 1.5 parts by mass, both inclusive, of the binder relative to 100 parts by mass of the positive electrode active material.

**3.** The rectangular nonaqueous electrolyte secondary battery of claim 2, wherein the positive electrode material mixture layer contains 1.1 parts by mass to 1.5 parts by mass, both inclusive, of the binder relative to 100 parts by mass of the positive electrode active material.

**4.** The rectangular nonaqueous electrolyte secondary battery of claim 1, wherein
the binder is a copolymer containing a PVdF or VdF unit.

**5.** The rectangular nonaqueous electrolyte secondary battery of claim 4, wherein the binder has a molecular weight of 1,000,000 or higher.

**6.** A method for manufacturing the rectangular nonaqueous electrolyte secondary battery of claim 1, the method comprising:

providing positive electrode material mixture slurry containing the positive electrode active material and the binder on a surface of the positive electrode current collector;
drying the positive electrode material mixture slurry;
rolling the positive electrode current collector on the surface of which the positive electrode active material and the binder are provided; and
thermally treating the rolled positive electrode current collector.

# FIG.1

| | THERMAL TREATMENT OF ROLLED POSITIVE ELECTRODE | | TENSILE STRENGTH OF POSITIVE ELECTRODE [N/cm] | CHARGE/ DISCHARGE CYCLE TEST |
|---|---|---|---|---|
| | THERMAL TREATMENT TEMPERATURE [°C] | THERMAL TREATMENT TIME [s] | | EXPANSION OF BATTERY CASE [mm] |
| BATTERY 1 | 280 | 60 | 7 | 0.1 |
| BATTERY 2 | | 40 | 10 | 0.2 |
| BATTERY 3 | | 20 | 15 | 0.3 |
| BATTERY 4 | 230 | 60 | 17 | 0.8 |
| BATTERY 5 | – | – | 20 | 1.2 |

# FIG.2

| POROSITY OF POSITIVE ELECTRODE MATERIAL MIXTURE LAYER[%] | (NUMBER OF ELECTRODE GROUPS WITH BROKEN POSITIVE ELECTRODE CURRENT COLLECTORS)/ (TOTAL NUMBER OF ELECTRODE GROUPS) |
|---|---|
| 30 | 0/20 |
| 20 | 3/20 |

FIG.3

3
4
5
6
12a
11a
1
2

FIG.4

1
11A
11B
11
13
12A
12B
12

FIG.5

44
46
47
43
42
41
34
38
37
33
32
36
39
40
35
45
48
50
31

# FIG.6

| | PVDF CONTENT [PARTS BY MASS] | THERMAL TREATMENT AFTER ROLLING | TENSILE STRENGTH [N/cm] | PEEL STRENGTH [N/m] | NUMBER OF ELECTRODE GROUPS WITH BROKEN POSITIVE ELECTRODES | CAPACITY [mAh] | POROSITY [%] | Δ TI [mm] | Δ TS [mm] |
|---|---|---|---|---|---|---|---|---|---|
| BATTERY 6 | 1.1 | PERFORMED | 15 | 9 | 0 | 900 | 15 | 0.05 | 0.3 |
| BATTERY 7 | 1.5 | PERFORMED | 15 | 15 | 0 | 900 | 15 | 0.05 | 0.3 |
| BATTERY 8 | 0.6 | PERFORMED | 15 | 3 | 0 | 900 | 15 | 0.05 | 0.3 |
| BATTERY 9 | 1.1 | NOT PERFORMED | 20 | 10 | 0 | 900 | 15 | 0.20 | 0.5 |
| BATTERY 10 | 1.7 | PERFORMED | 15 | 20 | 5 | 900 | 15 | 0.05 | 0.3 |
| BATTERY 11 | 0.4 | PERFORMED | 15 | 2 | 0 | 800 | 15 | 0.05 | 0.3 |

**INTERNATIONAL SEARCH REPORT**

International application No.
PCT/JP2010/004042

A. CLASSIFICATION OF SUBJECT MATTER
*H01M10/0587*(2010.01)i, *H01M4/13*(2010.01)i, *H01M4/139*(2010.01)i, *H01M4/62* (2006.01)i, *H01M10/052*(2010.01)i

According to International Patent Classification (IPC) or to both national classification and IPC

B. FIELDS SEARCHED

Minimum documentation searched (classification system followed by classification symbols)
H01M10/0587, H01M4/13, H01M4/139, H01M4/62, H01M10/052

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | WO 2009/019861 A1 (Panasonic Corp.), 12 February 2009 (12.02.2009), paragraphs [0024], [0074] to [0084], [0106], [0138] to [0262]<br>& JP 2009-64770 A & JP 2010-3705 A<br>& US 2010/0068627 A & EP 2197069 A<br>& KR 10-2009-0086457 A & CN 101569051 A | 1-6 |
| Y | JP 2007-26984 A (Daido Metal Co., Ltd.), 01 February 2007 (01.02.2007), paragraph [0012]<br>& US 2007/0020514 A1 | 1-6 |

[X] Further documents are listed in the continuation of Box C. [ ] See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 25 August, 2010 (25.08.10) | 07 September, 2010 (07.09.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No. PCT/JP2010/004042

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2006-185887 A (Matsushita Electric Industrial Co., Ltd.), 13 July 2006 (13.07.2006), paragraphs [0034] to [0038] & US 2006/0115730 A1 & KR 10-2006-0060609 A & CN 1776938 A | 2,3,5 |
| Y | JP 2004-356004 A (Matsushita Electric Industrial Co., Ltd.), 16 December 2004 (16.12.2004), claims 1, 4, 5 (Family: none) | 2,3,5 |
| Y | JP 2005-251684 A (Toshiba Corp., Toshiba Electronic Engineering Corp.), 15 September 2005 (15.09.2005), claim 1 (Family: none) | 2,3,5 |
| P,A | WO 2009/122717 A1 (Panasonic Corp.), 08 October 2009 (08.10.2009), entire text (Family: none) | 1-6 |
| A | JP 2008-186704 A (Matsushita Electric Industrial Co., Ltd.), 14 August 2008 (14.08.2008), entire text (Family: none) | 1-6 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H05182692 B
- JP 2002343340 A
- JP 2008159410 A
- JP 2009017592 A
- WO 2009019861 A